# EUROPEAN PATENT SPECIFICATION

(11) **EP 4 494 899 B1**
(45) Date of publication and mention of the grant of the patent: **03.06.2026**
(21) Application number: 24206121.6
(22) Date of filing: 10.12.2021
(51) Int. Cl.: B60C 11/03, B60C 11/12

(54) **CAR TYRE**
FAHRZEUGREIFEN
PNEUMATIQUE POUR VOITURE

(30) Priority: 18.12.2020 IT 202000031454
(43) Date of publication of application: 22.01.2025
(62) Divisional of application: 21834907.4
(73) Proprietor: Pirelli Tyre S.p.A., 20126 Milano (IT)
(72) Inventor: SPEZIARI, Diego Ettore, 20126 Milano (IT); BOLZONI, Roberto, 20126 Milano (IT); MONTESELLO, Stefano, 20126 Milano (IT); CASAROTTO, Giovanni, 20126 Milano (IT)
(74) Representative: Fabiano, Piero

(56) References cited:
- EP-A1- 0 547 019
- EP-A1- 3 081 398
- EP-A2- 3 000 621
- US-A1- 2017 361 659

## Description

### Field of the invention

The present invention relates to a car tyre suitable for bearing high loads, in particular an "all season" tyre suitable for fitting to cars such as SUVs and crossovers, and/or to light transport vehicles such as vans and commercial vehicles.

### Prior art

So-called "all-season" tyres are suitable for use in both winter and summer, and because of this feature, which spares the user from having two sets of dedicated tyres, each suitable for a specific season, they are highly appreciated and requested by users.

The following documents describe some examples of "all season" tyres and/or state of the art tyre: EP3157764, US7814951, EP2156968, US6892775, EP3000621, US2017361659, EP3081398 and EP0547019.

### Summary of the invention

This kind of tyre is generally required to have a very flexible behavior, which should enable it to provide performance comparable to summer tyres in summer and to winter tyres in winter.

The Applicant noted that, in order to have a performance on wet grounds comparable to so-called winter tyres, "all season" tyres should have treads characterized by a high number of grooves and by a greater depth thereof, as compared to a common summer tyre.

The Applicant further noted that, similarly to winter tyres, "all season" tyres may be characterized by the presence of a dense siping, which, particularly when the tyre rolls on snow-covered roads, increases the tyre grip on this type of surface, because small amounts of snow are captured into the sipes and friction is increased by the contact of snow against snow.

Vans or commercial vehicles are generally relatively large cars, which are heavier than sedan cars or station wagons and/or which, in any case, are suitable for transporting even large loads.

This kind of vehicles requires tyres which, although similar in size to tyres for cars, such as sedans and station wagons, are characterized by greater structural strength and a higher load index.

Generally, these features give the tyres an excellent ability to withstand heavy loads. On the other hand, when using these tyres under load, particular care in controlling wear evenness shall be taken.

Similar issues arise also in tyres suitable for the SUV and/or crossover segment. In fact, also SUVs and crossovers are generally large, powerful and heavier vehicles than sedans or station wagons, and often require tyres with significant dimensions in terms of nominal section width and fitting diameters.

The structure strengthening or the significant dimensions in terms of nominal section widths and fitting diameters, which are mandatory for this kind of application due to the high loads to which the tyres are subjected, make controlling their wear more critical. Additionally, the performance required of these tyres as to strength at high speeds and to the increasingly stringent requirements about noise control have to be taken into account too.

In this regard, the Applicant observed that, generally, when trying to affect the tyre performance, it is provided that in the area where the tyre contacts the ground (footprint area) there is as much rubber as possible on the ground. This requirement is clearly in contrast to the requirement of "all season" tyres to have a high number of grooves, recesses and/or sipes.

In view of the above, it is clear that "all season" tyres, in particular for light transport vehicles such as vans or commercial vehicles, and/or for heavier cars such as SUVs or crossovers, shall meet several conflicting requirements in order to provide good performance in all different road and weather conditions.

The Applicant has therefore faced the problem of providing "all season" tyres in particular for vans or commercial vehicles and/or for SUVs or crossovers, which can provide low noise, regular wear, high performance levels, braking and traction, without at the same time reducing drainage, driving safety on wet grounds, and mobility/driving safety on snow-covered grounds.

The Applicant focused its efforts on solving this problem and manufactured a tyre having a tread band preferably provided with a plurality of longitudinal channels and a plurality of grooves and sipes, having a substantially transverse course, regularly arranged in the central ribs formed by the longitudinal channels and in the shoulder regions on the whole tread band. In order to obtain the desired balance, notches have been obtained by joining a groove and a sipe having a transverse course, are consecutively arranged with each other, and extend seamlessly substantially over the whole tyre portion containing them, i.e. the shoulder regions or some, preferably all, of the central ribs.

In a first aspect thereof, the invention relates to car tyre having a tread band comprising a central region, extending across an equatorial plane, and two shoulder regions, which are separated from the central region by a first circumferential groove, axially delimiting a first shoulder region from the central region, and a second circumferential groove, axially delimiting a second shoulder region from the central region.

The central region has a width greater than or equal to at least 35%, preferably at least 40%, of an effective width of the tread band.

The first shoulder region and the second shoulder region comprise a plurality of first transverse grooves having a first end located substantially at the respective edge of the tread band.

At least one of the first shoulder region and the second shoulder region comprise a plurality of first sipes, having a substantially transverse course, consecutively arranged relative to the first transverse grooves, so that an overall extension of said first transverse grooves and of said first sipes is equal to at least 90% of the width of the shoulder region where they are located.

The first transverse grooves have an extension greater than the extension of the first sipes.

The first transverse grooves have a maximum width greater than or equal to 4 mm.

The central region comprises a first and a second circumferential rib separated by a third circumferential groove. The first and second circumferential ribs comprise a plurality of second transverse grooves and a plurality of second sipes, having a substantially transverse course, consecutively arranged relative to the second transverse grooves, so that an overall extension of the second transverse grooves and the second sipes is equal to at least 90% of the width of the circumferential rib where they are located.

The second transverse grooves have an extension greater than the extension of the second sipes.

The second transverse grooves have a maximum width greater than or equal to 2 mm; The tread band also comprises a further plurality of sipes.

The Applicant has proved that the substantial absence of interruptions in the transverse notches reduces stiffness variations within the footprint area of the tread band in the axial direction, thus limiting the onset of phenomena of excessive and localized dissipation of thermal energy due to sliding while the tyre is rolling, to the advantage of wear evenness.

The presence of transverse notches having a significant extension, characterized by segments of different widths, which result from the consecutive connection of a groove and a sipe, allows good traction and braking features to be obtained, particularly when driving on snow-covered grounds, without at the same time excessively limiting the tyre performance on dry roads.

Finally, the presence of a siping, in particular with a regular and homogeneous distribution, acts synergistically with the reduced variation of the tread band stiffness in the axial direction, further improving mileage and allowing good drainage and a good behavior on snow to be achieved.

For the purposes of the present invention, the following definitions apply.

By "tread pattern" it is meant the representation of all points of the tread band (including recesses) in a plane perpendicular to the equatorial plane of the tyre and tangential to the maximum diameter of the tyre.

The measurements of angles and/or linear quantities (distances, widths, lengths, etc.) and/or surfaces shall be understood as referring to the tread pattern as defined above.

Furthermore, considering the angular arrangement of the grooves, recesses and/or sipes (or segments of grooves, recesses and/or sipes) formed in the tread band relative to the equatorial plane of the tyre, such angular arrangement shall be understood, for each point of the groove, as referring to the acute angle (i.e. comprised between 0° and 90° in absolute value) defined by a rotation starting from the equatorial plane to the direction tangent to the groove, recess or sipe (or segment thereof) passing through that point. Furthermore, the angular arrangement shall be understood with reference to an overall course of the groove, recess or sipe (or segment thereof). For example, in the case of sipes or sipe segments having a zigzagging course, the angular arrangement shall be understood as referring to the average inclination of the sipe or sipe segment having the zigzagging course.

By the term "equatorial plane" of the tyre it is meant a plane perpendicular to the rotation axis of the tyre and dividing the tyre into two substantially equal portions.

By "circumferential" or "longitudinal" direction it is meant a direction generally directed according to the rotation direction of the tyre, or slightly inclined (e.g. by about 20° at most) relative to the rotation direction of the tyre.

By "axial" direction it is meant a direction substantially parallel to the rotation axis of the tyre, or slightly inclined (e.g. by about 20° at most) relative to the rotation axis of the tyre. Generally, the axial direction is substantially perpendicular to the circumferential direction.

By the term "effective width" referred to the tread band it is meant the width of the radially outermost portion of the tread band (from one edge to the other) intended to contact the ground.

By the term "groove" it is meant a recess formed in a portion of the tread band, having a width greater than or equal to 1 mm and preferably a depth greater than or equal to 2 mm.

By the term "sipe" it is meant a recess formed in a portion of the tread band, having a width smaller than 1 mm, substantially along its whole extension. Typically, at the radially outer surface of the tread band, a sipe has an extension greater than its width. Preferably, at the radially outer surface of the tread band, a sipe has an extension greater than or equal to 3 mm.

In general, the function of the sipes is to provide further grip elements, in addition to the grooves, when driving on snow-covered surfaces and to retain a certain amount of snow, thus improving grip to the road surface.

The width of sipes and grooves shall be measured on a new tyre, at or near the radially outer surface of the tread band.

By "void-to-rubber ratio" it is meant the ratio between the total surface area of the grooves in a given tread band portion (possibly of the whole tread band) and the total surface area of the given portion (possibly of the whole tread band).

The present invention, in one or more preferred aspects thereof, may comprise one or more of the features presented hereinafter.

Conveniently, the overall extension of the first transverse grooves and the first sipes may be equal to 100% of the width of the shoulder region where they are located. Advantageously, the overall extension of the second transverse grooves and the second sipes may be equal to 100% of the width of the circumferential rib where they are located.

Preferably, the further plurality of sipes may comprise a plurality of third sipes having a substantially transverse course and located in at least one circumferential rib of the central region. The third sipes may extend over at least 60% of the width of the circumferential rib where they are located.

Conveniently, the third sipes may extend over 100% of the width of the circumferential rib where they are located.

Preferably, the third sipes are interposed between the second transverse grooves. Preferably, they have a course which is substantially parallel to the course of the second transverse grooves over at least 50% of their extension.

Advantageously, the third sipes are mutually spaced away in the circumferential direction and have no points of mutual intersection and/or points of intersection with said second transverse grooves.

Conveniently, the further plurality of sipes may comprise a plurality of fourth sipes having a substantially transverse course and located in at least one circumferential rib of the central region; the fourth sipes may have a smaller extension as compared to the third sipes.

Preferably, the fourth sipes are spaced away from and have no intersection points with the third sipes and/or the second transverse grooves.

Preferably, the fourth sipes extend over at most 60% of the width of the circumferential rib where they are located.

Conveniently, the further plurality of sipes may comprise a plurality of fifth sipes having a substantially transverse course and located in said first and second shoulder region; the fifth sipes may have an extension greater than 60% of the width of the shoulder region where they are located.

Advantageously, at least some of the fifth sipes may extend starting from the first and/or the second circumferential grooves.

Preferably, the first sipes may have an extension smaller than or equal to 1/3 of the extension of the first transverse grooves.

Preferably, the second sipes may have an extension smaller than or equal to 1/3 of the extension of the second transverse grooves.

In an embodiment, the central region may comprise a third circumferential rib located between the first or the second circumferential groove and a fourth circumferential groove. The third circumferential rib may comprise a plurality of third transverse grooves.

Conveniently, the second and/or the third transverse grooves may be inclined relative to the equatorial plane so as to form an angle greater than or equal to 35°, preferably of between 40° and 75°.

Advantageously, the third transverse grooves may have a maximum width greater than or equal to 2 mm and/or an extension greater than 60% of the width of the third circumferential rib.

Preferably, the first transverse grooves may have a maximum width smaller than or equal to 8 mm. Preferably, the second and/or third transverse grooves may have a maximum width smaller than or equal to 5 mm. Preferably, the second and/or third transverse grooves may have a maximum width smaller than the maximum width of the first transverse grooves.

According to the invention, the first, second and/or third circumferential ribs, and preferably the first and/or second shoulder regions, may comprise a plurality of longitudinal grooves. Preferably, at least some of the longitudinal grooves intersect at least two third sipes.

Conveniently, the longitudinal grooves may extend starting from a first, a second or a third transverse groove.

In an embodiment, at least some of the longitudinal grooves intersect a first, a second and/or a third transverse groove.

Conveniently, the fourth sipes extend in the third circumferential rib starting from the longitudinal grooves and preferably up to said fourth circumferential groove and/or up to said first or said second circumferential groove.

Preferably, the longitudinal grooves have a maximum depth smaller than a maximum depth of the first, second and/or third transverse grooves.

Advantageously, the longitudinal grooves may have a maximum width smaller than the maximum width of the first, second and/or third transverse grooves.

Advantageously, the second transverse grooves and/or the third transverse grooves may have a curvilinear course.

Preferably, the first, second, third, fourth and/or fifth sipes may have a maximum depth greater than a maximum depth of the first, second and/or third transverse grooves. Conveniently, the first, second, third and/or fourth circumferential grooves may have a maximum depth greater than a maximum depth of the first, second and/or third transverse grooves.

Preferably, said tread band has a void-to-rubber ratio greater than 24%.

Further features and advantages of the invention shall become clearer from the detailed description of some preferred, although not exclusive, embodiments of an "all season" tyre, particularly for vans and commercial vehicles, according to the present invention.

### Brief description of the drawings

Such description shall be made hereafter with reference to the accompanying drawings, provided only for indicating, and thus non-limiting, purposes, wherein:
- figure 1 shows a front view of a first example of a car tyre as being no part of the invention suitable for bearing high loads, in particular an "all season" tyre suitable for fitting to cars such as SUVs and crossovers, and/or to light transport vehicles, such as vans and commercial vehicles, of the same Applicant;
- figure 2 is an enlarged view of a cross-section of the tyre of figure 1;
- figure 3 is a schematic plan view of a tread band portion of the tyre of figure 1.
- figure 4 is a schematic plan view of a tread band portion of a second example of the tyre according to the invention; and
- figure 5 is a schematic plan view of a tread band portion of a third example of the tyre according to the invention.

### Detailed description of embodiments of the invention

With reference to the attached figures, an "all season" tyre for car wheels intended to bear high loads, e.g. for vans and commercial vehicles or SUVs and crossovers, is generally indicated by reference numeral 1.

The structure of the tyre 1 is by itself of a conventional type and comprises a carcass, a tread band 8 placed in crown to the carcass, a pair of axially opposed sidewalls, ending in beads reinforced by bead cores and associated bead fillers. The tyre preferably also comprises a belt structure interposed between the carcass and the tread band. The carcass comprises one or more carcass plies anchored to the bead cores, whereas the belt structure comprises two belt strips radially superimposed to each other. The belt strips are formed of pieces of a rubberized fabric incorporating metal cords parallel to one another in each strip and having a crossed orientation, preferably with a symmetrical inclination relative to the equatorial plane, relative to the cords of adjacent strips. Preferably, the belt structure also comprises, in a radially outermost position, a third belt strip provided with cords oriented substantially parallel to the equatorial plane. Preferably, although not necessarily, the tyre according to the invention has a nominal section width of at least about 165, more preferably of at least about 185. For example, the tyre may have a nominal section width of 195, 225, 245, 275. Preferably, the tyre according to the invention has a reduced section height. For example, the section height may be smaller than or equal to 70%, more preferably smaller than or equal to 60%, of the nominal section width.

The tyre 1 preferably has an H/C ratio between the height H of the straight section and the maximum section width C of between 0.25 and 0.70.

In order to ensure long mileage and, at the same time, high performance throughout the entire life of the tyre, particularly with regard to handling on wet and snow-covered grounds, the tread band 8 has an overall void-to-rubber ratio greater than 24%, preferably greater than 26%.

Preferably, the overall void-to-rubber ratio of the tread 8 is smaller than 36%, more preferably smaller than 34%.

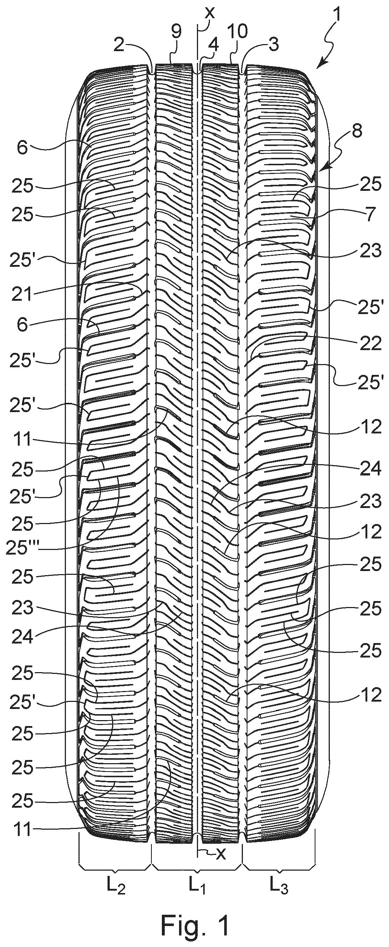

A first embodiment of a tread pattern of a tyre of the same Applicant particularly suitable for fitting to wheels of vans or commercial vehicles is shown in figures 1 to 3.

According to this embodiment, the tread band 8 is provided with three circumferential grooves, respectively a first 2, a second 3 and a third 4 circumferential groove, extending in a substantially circumferential direction. The first 2 and the second 3 circumferential groove separate a central region L1 of the tread band 8 from two shoulder regions, respectively a first L2 and a second L3 shoulder region, of the tread band 8, respectively located to the left and to the right of the central region L1.

The central region L1 is crossed by the equatorial X-X plane of the tyre. The first L2 and the second L3 shoulder region extend close to the axial ends of tread band 8.

Although not represented by clearly recognizable edges, the ends of the tread 8 may be defined by the intersection of extensions, in a substantially axial direction, of the radially outermost portion of the tread 8 and extensions, in a substantially radial direction, of the axially outermost portions of the tread 8.

The first shoulder region L2 is located on the outer side of the tyre, whereas the second shoulder region L3 is located on the inner side of the tyre.

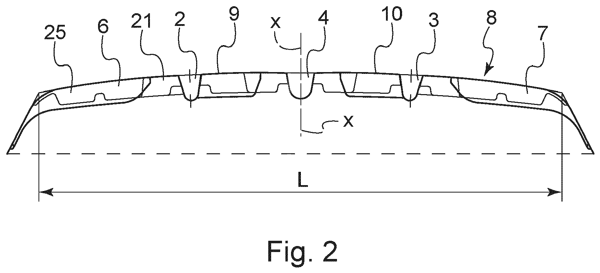

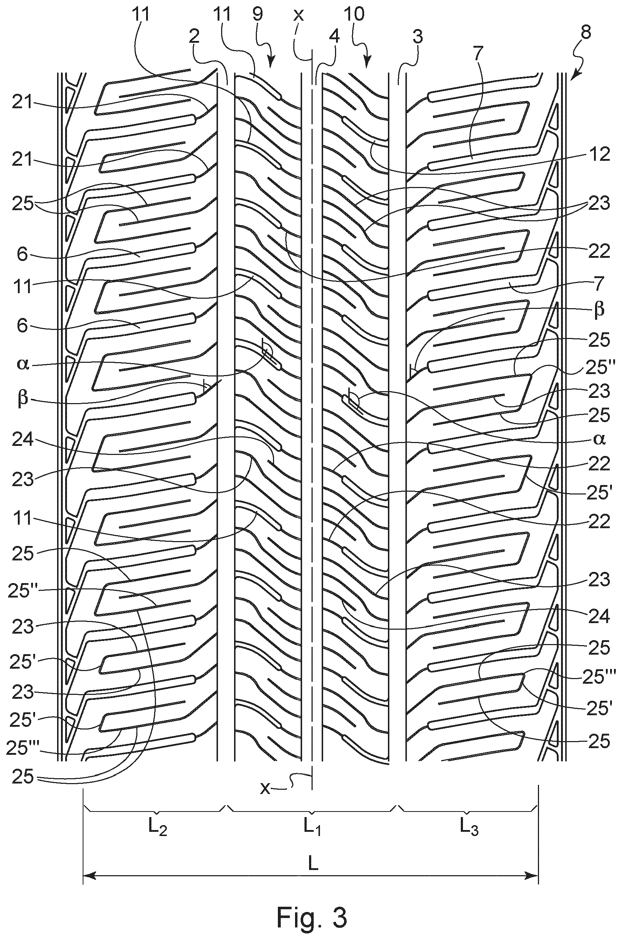

The central region L1 may have a width greater than or equal to 35%, preferably greater than or equal to 40%, of the effective width of the tread band 8, i.e. the width of the portion of the tread band 8 intended to contact the ground. In figures 2 and 3 this portion is substantially defined by the two dash-dotted lines passing through the axial ends of the tread band 8 itself.

The first shoulder region L2 of the tread band 8 has substantially the same width as the second shoulder region L3.

The first L2 and the second L3 shoulder regions each have a width smaller than 30% of the effective width of the tread band 8. Preferably, the first L2 and the second L3 shoulder region have a width smaller than 25% of the effective width of the tread band 8.

The first circumferential groove 2 delimits in axial direction the first shoulder region L2 from the central region L1 of the tread band 8, whereas the second circumferential groove 3 delimits in axial direction the second shoulder region L3 from to the central region L1.

The third circumferential groove 4 is arranged in the central region L1 so as to identify two circumferential ribs 9,10, respectively a first 9 and a second 10 circumferential rib, described in more detail below. In the embodiment shown in figures 1-3, the third circumferential groove 4 is located substantially at the equatorial plane X-X of the tread band 8.

The first 2, second 3, and third 4 circumferential grooves have a substantially straight course in the circumferential direction, preferably along the whole circumferential development of the tyre.

The first 2, second 3, and third 4 circumferential grooves are mainly responsible for draining and removing water, particularly from the central region L1 of the tyre.

For this purpose, the first 2, second 3, and third 4 circumferential grooves preferably have a maximum depth of between about 5 mm and about 12 mm, more preferably between about 8 mm and about 11 mm.

For the same reason, the first 2, second 3, and third 4 circumferential grooves may have a width of between about 7 mm and 12 mm.

Preferably, the first shoulder region L2 and/or the second shoulder region L3 have a void-to-rubber ratio smaller than about 0.20, preferably smaller than about 0.18. Preferably, the first shoulder region L2 and the second shoulder region L3 have a void-to-rubber ratio greater than about 0.10, preferably greater than about 0.12.

In order to achieve such a void-to-rubber ratio, the shoulder regions comprise a plurality of first transverse grooves 6, 7 and, preferably, a plurality of first 21 and fifth 25 sipes. In detail, the first and second shoulder regions L2, L3 each comprise a plurality of circumferentially repeating first transverse grooves 6, 7.

The first transverse grooves 6, 7 extend substantially parallel to one another respectively in the first and second shoulder regions L2, L3.

In particular, corresponding segments of two circumferentially consecutive first transverse grooves 6, 7 have a mutual distance of at least about 20 mm.

The first transverse grooves 6, 7 have a maximum width greater than or equal to 4 mm. Preferably, the first transverse grooves 6, 7 have a maximum width smaller than about 8 mm.

Preferably, the first transverse grooves 6, 7 have a maximum depth greater than about 5 mm. Preferably, the first transverse grooves 6, 7 have a maximum depth smaller than about 12 mm.

The first transverse grooves 6,7 extend axially over at least 70% of the width of the respective shoulder region L2, L3; in particular, the first transverse grooves 6, 7 extend from a first end located substantially at the respective edge of the tread band 8.

In the embodiment shown in figures 1-3, both the first and the second shoulder regions L2, L3 have a plurality of first sipes 21 having a substantially transverse course and consecutively arranged relative to the first transverse grooves 6, 7.

The first sipes 21 are consecutively arranged relative to the first transverse grooves 6,7 so that the continuity between a first transverse groove 6, 7 and the first sipe 21 arranged consecutively thereto is not broken.

The first sipes 21 are consecutively arranged relative to the first transverse grooves 6, 7 so that the overall extension of a first transverse groove 6, 7 and a first sipe 21 is equal to at least 90% of the width of the shoulder region L2, L3 where they are located. Preferably, the overall extension of a first transverse groove 6, 7 and a first sipe 21 is equal to 100% of the width of the shoulder region L2, L3 where they are located.

The first sipes 21 have a smaller extension as compared to the extension of the first transverse grooves 6, 7.

Preferably, the first sipes 21 have an extension smaller than 1/3 of the extension of the first transverse grooves 6, 7.

In the embodiment shown in figures 1-3, the first sipes 21 extend from one end of the first transverse grooves 6, 7 up to merging into the first 2 and second 3 circumferential grooves. Preferably, the first sipes 21 have a substantially straight course.

Preferably, the first sipes 21 are inclined relative to a direction parallel to the equatorial plane X-X so as to form, at least in a portion of their extension, an angle β smaller than the angle formed by the first transverse grooves 6, 7.

The first sipes 21 preferably have a maximum width smaller than about 1 mm.

The first sipes 21, as shown in figure 2, may have a constant depth along their extension, or, in a different embodiment, not shown in the figure, may have a reduction in depth at the first 2 and/or the second 3 circumferential groove.

Preferably, the first sipes 21 have a maximum depth greater than about 5 mm. Preferably, the first sipes 21 have a maximum depth smaller than about 10 mm. Preferably, the maximum depth of the first sipes 21 is smaller than the maximum depth of the first 2 and the second 3 circumferential groove.

In order to improve the behavior on snow, the shoulder regions L2, L3 further have a plurality of fifth sipes 25 with a substantially transverse course, interposed between said first transverse grooves 6, 7 and said first sipes 21.

The fifth sipes 25 have extension greater than 60% of the width of the respective shoulder region L2, L3 where they are located.

Preferably, in at least a major portion of their extension, the fifth sipes 25 have a straight course.

Preferably, in at least a major portion of their extension, the fifth sipes 25 have a course parallel to the course of the first transverse grooves 6, 7. Preferably, over at least a portion thereof, at least some of the fifth sipes 25 extend parallel to the first sipes 21. Some of the fifth sipes 25 extend starting from the first 2 or the second 3 circumferential groove.

Some of the fifth sipes 25 do not extend starting from the first 2 or the second 3 circumferential groove, rather they have respective ends spaced away therefrom. Some of the fifth sipes 25 may be joined by short segments 25' with a longitudinal course.

The short segments 25' with a longitudinal course have an extension substantially in the circumferential direction smaller than 1/5 of the overall extension of the fifth sipes 25. The short segments 25' may, for example, join two fifth sipes 25 not extending from the first circumferential grooves 2, 3, so as to form a single C-shaped sipe 25''.

Alternatively, the short sections 25' may join two fifth sipes 25 only one of which extends from a first circumferential groove 2, 3, so as to form a single substantially spiral-shaped sipe 25‴.

Preferably, the fifth sipes 25 have a maximum depth greater than about 5 mm. Preferably, the fifth sipes 25 have a maximum depth smaller than about 10 mm.

The fifth sipes 25 have a maximum width smaller than about 1 mm.

Preferably, the fifth sipes 25 are made as described in patent application WO 2017/212399, to the same Applicant,.

The central L1 region is designed so as to have a good balance between recesses and amount of rubber on the ground, keeping the stiffness of the tread band 8 as uniform as possible in axial direction.

In the embodiment shown in figures 1-3, the central region L1 has a first 9 and a second 10 circumferential rib separated by the third circumferential groove 4, the latter being disposed substantially across the equatorial plane X-X.

At least one of the first 9 and the second 10 circumferential rib, preferably both of them, has a void-to-rubber ratio greater than about 0.10.

At least one of the first 9 and the second 10 circumferential rib, preferably both of them, has void-to-rubber ratio smaller than about 0.15.

To this end, the first 9 and second 10 circumferential ribs comprise a plurality of second transverse grooves 11, 12 and a plurality of second and third sipes 22, 23.

In the tyre shown in figures 1-3, the second transverse grooves 11 are located in the first rib 9, whereas the second transverse grooves 12 are located in the second circumferential rib 10.

The second transverse grooves 11, 12 preferably have a maximum width greater than or equal to about 2 mm.

Preferably, the second transverse grooves 11, 12 have a maximum width smaller than about 5 mm.

Preferably, the second transverse grooves 11, 12 have a maximum depth smaller than 10 mm, preferably smaller than 8 mm. Preferably, the second transverse grooves 11, 12 have a maximum depth greater than 5 mm.

Preferably, the second transverse grooves 11, 12 may have a maximum depth smaller than the maximum depth of the first transverse grooves 6, 7.

Preferably, the second transverse grooves 11 extend over at least 50%, preferably 60%, of the width of the circumferential rib 9 where they are located.

Preferably, the second transverse grooves 12 too extend over at least 50%, preferably 60%, of the width of the circumferential rib 10 where they are located.

The second transverse grooves 11 and 12 may have a curvilinear course, preferably over their whole extension.

The second transverse grooves 11 and/or 12 are mutually spaced away in the circumferential direction by a distance preferably of between 25 mm and 50 mm.

The second transverse grooves 11 and 12 are inclined so as to form an angle α relative to the equatorial plane X-X.

In detail, the course of the second transverse grooves 11 and 12 forms an angle α relative the equatorial plane X-X of between 35° and 90°, preferably between 40° and 75°, in absolute value.

Both the first 9 and the second 10 circumferential rib have a plurality of second sipes 22 with a substantially transverse course, consecutively arranged relative to the second transverse grooves 11, 12.

The second sipes 22 are arranged consecutively relative to the second transverse grooves 11, 12 so that the continuity between the second transverse grooves 11, 12 and the second sipes 22 arranged consecutively thereto is not broken.

The second sipes 22 are arranged consecutively relative to the second transverse grooves 11, 12 so that the overall extension of the second transverse grooves 11, 12 and the second sipes 22 is equal to at least 90% of the width of the circumferential rib 9, 10 where they are located.

Preferably, the overall extension of the second transverse grooves 11, 12 and the second sipes 22 is equal to 100% of the width of the circumferential rib 9, 10 where they are located.

The second sipes 22 have a smaller extension as compared to the extension of the second transverse grooves 11, 12.

Preferably, the second sipes 22 have an extension which is smaller than 1/3 of the extension of the second transverse grooves 11, 12.

Preferably, the second sipes 22 have an inclination relative to the equatorial plane X-X similar to the inclination of the second transverse grooves 11 and 12.

In detail, the course of the second sipes 22 forms an angle relative to the equatorial plane X-X of between 35° and 90°, preferably between 40° and 75°, in absolute value.

In the embodiment shown in the figures the second sipes 22 have a curvilinear course. The second sipes 22 preferably have a maximum width smaller than about 1 mm. Preferably, the second sipes 22 do not have a constant depth along their extension, rather they have a reduction in depth at the third circumferential groove 4.

Preferably, the second sipes 22 have a maximum depth greater than about 5 mm. Preferably, the second sipes 22 have a maximum depth smaller than about 10 mm. Preferably, the maximum depth of the second sipes 22 is smaller than the maximum depth of the second transverse grooves 11, 12.

Still for improving the behavior on snow, particularly traction and braking, the first 9 and the second 10 circumferential rib also have a plurality of third sipes 23 and fourth sipes 24 with a substantially transverse course.

The third sipes 23 extend over at least 60%, preferably at least 80%, of the width of the respective circumferential rib 9, 10 where they are located.

In the embodiment shown in figures 1-3, the third sipes 23 extend over 100% of the width of the respective circumferential rib 9, 10 where they are located.

The third sipes 23 are mutually spaced away in the circumferential direction and have no points of mutual intersection and/or points of intersection with said second transverse grooves 11, 12 and/or said second sipes 22.

Therefore, in each circumferential rib 9, 10 the third sipes 23 are interposed between the second transverse grooves 11, 12 and preferably have a course substantially parallel to course of the second transverse grooves 11, 12 and the second sipes 22, at least over 50-60% of their extension.

Therefore, over at least a significant portion of their extension, the third sipes 23 have substantially the same inclination relative to the equatorial plane X-X as the second transverse grooves 11 and 12.

In detail, the course of the third sipes 23 forms an angle relative to the equatorial plane X-X of between 35° and 90°, preferably between 40° and 75°, in absolute value.

In the embodiment shown in the figures, the third sipes 23 do not have a straight course, rather they have a substantially curvilinear course along their extension.

The third sipes 23 preferably have a maximum width smaller than about 1 mm.

Preferably, the third sipes 23 do not have a constant depth along their extension, rather they have a reduction in depth at the first 2, second 3 and third 4 circumferential grooves. Preferably, the third sipes 23 have a maximum depth greater than about 5 mm. Preferably, the third sipes 23 have a maximum depth smaller than about 10 mm. Preferably, the maximum depth of the third sipes 23 is smaller than the maximum depth of the second transverse grooves 11, 12.

Preferably, the third sipes 23 are made as described in patent application WO 2017/212399, to the same Applicant, incorporated herein by reference.

Unlike the third sipes 23, the fourth sipes 24 do not extend over 100% of the width of the respective circumferential rib 9, 10 where they are located.

In fact, the fourth sipes 24 extend over at most 60% of the width of the circumferential rib 9, 10 where they are located.

The fourth sipes 24 thus have a smaller extension as compared to the third sipes 23. The fourth sipes 24 too are mutually spaced away in the circumferential direction and have no points of mutual intersection and/or points of intersection with the third sipes 23, the second transverse grooves 11, 12 or the second sipes 22.

In the embodiment shown in figures 1-3, the fourth sipes 24 extend starting from the third circumferential groove 4.

Therefore, in each circumferential rib 9, 10 the fourth sipes 24 are interposed between the second transverse grooves 11, 12 and the second sipes 22, and/or between the third sipes 23, and preferably have a course substantially parallel to the course of the third sipes 23.

In detail, the course of the fourth sipes 24 forms an angle relative to the equatorial plane X-X of between 35° and 90°, preferably between 40° and 75°, in absolute value.

In the embodiment shown in the figures, the fourth sipes 24 do not have a straight course, rather they have a substantially curvilinear course along their extension.

The fourth sipes 24 preferably have a maximum width smaller than about 1 mm. Preferably, the fourth sipes 24 do not have a constant depth along their extension, rather they have a reduction in depth at the third circumferential groove 4.

Preferably, the fourth sipes 24 have a maximum depth greater than about 5 mm. Preferably, the fourth sipes 24 have a maximum depth smaller than about 10 mm. Preferably, the maximum depth of the fourth sipes 24 is smaller than the maximum depth of the second transverse grooves 11, 12.

Preferably, the fourth sipes 24 are made as described in patent application WO 2017/212399, to the same Applicant, incorporated herein by reference.

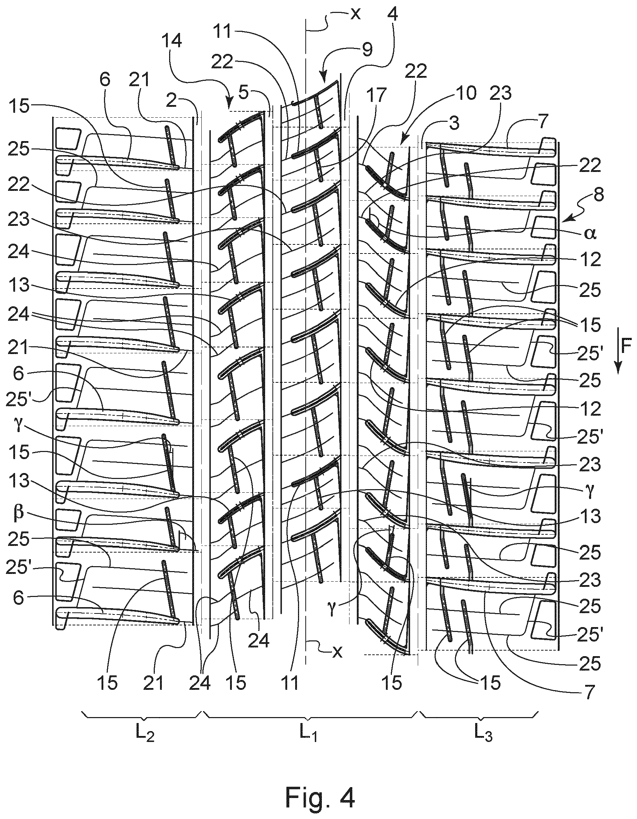

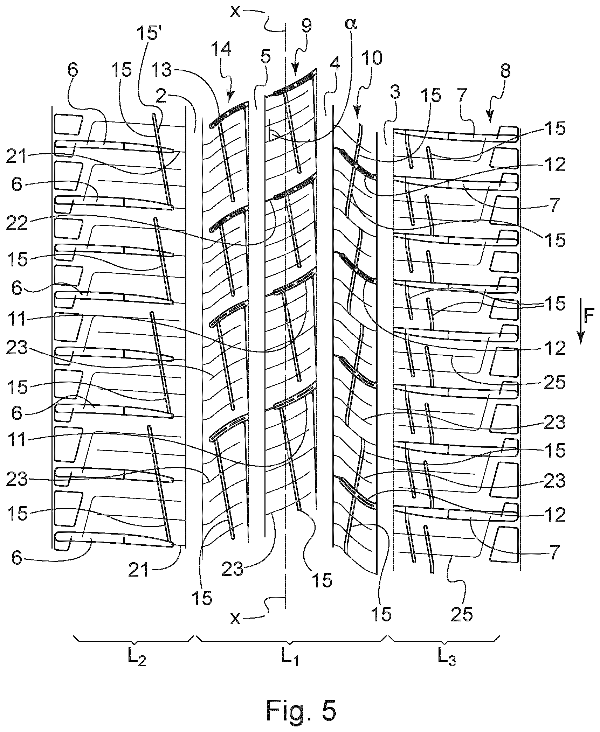

Figures 4 and 5 respectively show a second and a third embodiment of a tread pattern of a tyre according to the present invention particularly suitable for fitting to the wheels of SUVs and crossovers.

The second and third embodiments differ from each other in the form and distribution of the grooves and sipes located in the shoulder regions L2, L3 and in the central region L1. For this reason, the embodiment of figure 4 will be hereinafter described in detail, whereas for the embodiment of figure 5 only those aspects that make it different from the previous one will be described.

According to the embodiment of figure 4, the tread band 8 is provided with four circumferential grooves, respectively a first 2, a second 3, a third 4 and a fourth 5 circumferential groove, extending in a substantially circumferential direction. The first 2 and the second 3 circumferential groove separate a central region L1 of the tread band 8 from two shoulder regions of the tread band 8, respectively, a first L2 and a second L3 shoulder region, respectively located to the left and right of the central region L1. The central region L1 is crossed by the equatorial plane X-X of the tyre. The first L2 and the second L3 shoulder region extend close to the axial ends of the tread band 8. In this embodiment, the central region L1 may have a width greater than or equal to 45%, preferably greater than or equal to 50% of the effective width of the tread band 8. The first L2 and the second L3 shoulder region each have a width smaller than 35% of the effective width of the tread band 8. Preferably, the first L2 and the second L3 shoulder region have a width smaller than 30% of the effective width of the tread band 8.

The first circumferential groove 2 delimits in axial direction the first shoulder region L2 from the central region L1 of the tread band 8, whereas the second circumferential groove 3 delimits in axial direction the second shoulder region L3 from the central region L1.

The third 4 and the fourth 5 circumferential groove are located in the central region L1 so as to define three circumferential ribs, respectively a first 9, a second 10 and a third 14 circumferential rib, which are described in more detail below.

The first 2, second 3, third 4 and fourth 5 circumferential grooves have a substantially straight course in the circumferential direction, preferably along the whole circumferential development of the tyre.

The first 2, second 3, third 4 and fourth 5 circumferential grooves are mainly responsible for draining and removing water, particularly from the central region L1 of the tyre. For this reason, the first 2, second 3, third 4, and fourth 5 circumferential grooves preferably have a maximum depth of between about 5 mm and about 12 mm, more preferably between about 8 mm and about 11 mm.

For the same reason, the first 2, second 3, third 4, and fourth 5 circumferential grooves may have a width which of between about 7 mm and about 12 mm.

Preferably, the first shoulder region L2 and/or the second shoulder region L3 have a void-to-rubber smaller than about 0.25, preferably smaller than about 0.20.

Preferably, the first shoulder region L2 and the second shoulder region L3 have a void-to-rubber ratio greater than about 0.10, preferably greater than about 0.12.

In the embodiment of figure 4, the first and second shoulder regions L2, L3 each comprise a plurality of circumferentially repeating first transverse grooves 6, 7.

The first transverse grooves 6, 7 extend substantially parallel to one other respectively in the first and second shoulder regions L2, L3.

In particular, corresponding segments of two circumferentially adjacent first transverse grooves 6, 7 have a mutual distance of at least about 20 mm.

Preferably, the first transverse grooves 6, 7 have a substantially straight course over their whole extension.

The first transverse grooves 6, 7 have a maximum width greater than or equal to 4 mm. Preferably, the first transverse grooves 6, 7 have a maximum width smaller than about 8 mm.

Preferably, the first transverse grooves 6, 7 have a maximum depth greater than about 5 mm. Preferably, the first transverse grooves 6, 7 have a maximum depth smaller than about 12 mm.

The first transverse grooves 6, 7 extend axially over at least 70% of the width of the respective shoulder region L2, L3; in particular, the first transverse grooves 6, 7 extend starting from a first end located substantially at the respective edge of the tread band 8. In the embodiment shown in figure 4, the first transverse grooves 6 extend axially from an edge of the tread band 8 over at most 90% of the width of the respective shoulder region L2, whereas the first transverse grooves 7 extend axially from the other edge of the tread band 8 over 100% of the width of the respective shoulder region L3.

Thus, the first grooves 7 extend from the edge of the tread band 8 up to merging into the second circumferential groove 3; conversely, the first grooves 6 extend from the edge of the tread band 8 without merging into the first circumferential groove 2.

Both first transverse grooves 6, 7 have a decreasing width moving axially away from the respective edge of the tread band 8 from which they extend.

In the embodiment shown in figure 4, only the first shoulder region L2 has a plurality of first sipes 21, with a substantially transverse course, consecutively arranged relative to the first transverse grooves 6.

The first sipes 21 are consecutively arranged relative to the first transverse grooves 6 so that the continuity between the first transverse grooves 6 and the first sipes 21 arranged consecutively thereto is not broken.

The first sipes 21 are consecutively arranged relative to the first transverse grooves 6 so that the overall extension of the first transverse grooves 6 and the first sipes 21 is equal to at least 90% of the width of the shoulder region L2 where they are located. Preferably, the overall extension of the first transverse grooves 6 and the first sipes 21 is equal to 100% of the width of the shoulder region L2 where they are located.

The first sipes 21 have a smaller extension as compared to the extension of the first transverse grooves 6.

Preferably, the first sipes 21 have an extension smaller than 1/3 of the extension of the first transverse grooves 6.

The first sipes 21 extend from one end of the first transverse grooves 6 up to merging into the first circumferential groove 2. Preferably, the first sipes 21 have a substantially straight course.

Preferably, the first sipes 21 are inclined relative to a direction parallel to the equatorial plane X-X so as to form an angle β greater than 70°, preferably of between 75° and 90°. The first sipes 21 preferably have a maximum width smaller than about 1 mm. Preferably, the first sipes 21 do not have a constant depth along their extension, rather they have a reduction in depth at the first circumferential groove 2.

Preferably, the first sipes 21 have a maximum depth greater than about 5 mm. Preferably, the first sipes 21 have a maximum depth smaller than about 10 mm. Preferably, the maximum depth of the first sipes 21 is smaller than the maximum depth of the first circumferential groove 2.

In the embodiment shown in figure 4, the second shoulder region L3 has no first sipes 21 consecutively arranged relative to the first transverse grooves 7.

In order to improve the behavior on snow, the shoulder regions L2, L3 also have a plurality of fifth sipes 25 having a substantially transverse course.

The fifth sipes 25 have extension greater than 60% of the width of the respective shoulder region L2, L3 where they are placed.

Preferably, in at least a major portion of their extension, the fifth sipes 25 have a straight course.

Preferably, in at least a major portion of their extension, the fifth sipes 25 have a course parallel to the course of the first transverse grooves 6, 7.

Preferably, some of the fifth sipes 25 extend starting from the first 2 or second 3 circumferential groove.

Preferably, some of the fifth sipes 25 do not extend starting from the first 2 and the second 3 circumferential groove, rather they have respective ends spaced away therefrom.

At the buttress region of the tyre some of the fifth sipes 25 may have short segments 25' with a longitudinal course.

The short segments 25' with a substantially longitudinal course may join the fifth sipes 25 with the first transverse grooves 6, 7.

The short segments 25' of the fifth sipes 25 have an extension substantially in the circumferential direction smaller than 1/5 of the overall extension of the fifth sipes 25. Preferably, the fifth sipes 25 are made as described in patent application WO 2017/212399, to the same Applicant, incorporated herein by reference.

The first and second shoulder regions L2, L3 also have a plurality of longitudinal grooves 15, which are arranged to help provide grip to the tyre when cornering in low-grip conditions (e.g. when driving on snow-covered grounds).

In particular, in the embodiment shown in figure 4, the first shoulder region L2 has a single row of longitudinal grooves 15 (one longitudinal groove 15 for each first transverse groove 6), whereas the shoulder region L3 has two rows of longitudinal grooves 15 (two longitudinal grooves 15 for each first transverse groove 7).

The longitudinal grooves 15 located in the shoulder regions L2, L3 preferably extend in the circumferential direction starting from the first transverse grooves 6, 7. In particular, some of the longitudinal grooves 15 extend starting from the end of the first transverse grooves 6,7 which is closest to the equatorial plane X-X.

The longitudinal grooves 15 located in the shoulder regions L2, L3 have a smaller extension as compared to the extension of the first transverse grooves 6, 7.

Preferably, the longitudinal grooves 15 located in the shoulder regions L2, L3 have a substantially straight course.

Preferably, the longitudinal grooves 15 located in the shoulder regions L2, L3 are inclined relative to a direction parallel to the equatorial plane X-X so as to form an angle γ smaller than 30°, preferably of between 0° and 20°.

Preferably, the longitudinal grooves 15 located in the shoulder regions L2, L3 do not intersect two circumferentially consecutive first grooves 6,7.

The longitudinal grooves 15 located in the shoulder regions L2, L3 preferably have a maximum width smaller than about 3 mm.

Preferably, the longitudinal grooves 15 located in the shoulder regions L2, L3 have a maximum depth greater than about 1.5 mm. Preferably, the longitudinal grooves 15 located in the shoulder regions L2, L3 have a maximum depth smaller than about 3 mm. Preferably, the longitudinal grooves 15 located in the shoulder regions L2, L3 have a depth smaller than the depth of the first transverse grooves 6, 7 and/or the first sipes 21 and/or the fifth sipes 25.

In the embodiment of figure 4, the central region L1 comprises three circumferential ribs, respectively a first 9, a second 10 and a third 14 circumferential rib, comprising a plurality of circumferentially repeating second and third transverse grooves 11,12 and 13.

At least one of the first 9 or the second 10 or the third 14 circumferential rib (preferably all of them) has a void-to-rubber ratio greater than about 0.10.

Preferably, at least one of the first 9 or the second 10 or the third 14 circumferential rib (preferably all of them) has a void-to rubber ratio smaller than about 0.15.

In detail, in figure 4 the second transverse grooves 11, 12 are located in the circumferential ribs 9, 10, respectively, whereas the third transverse grooves 13 are located in the circumferential rib 14.

The second transverse grooves 11, 12 and the third transverse grooves 13, preferably being notches of significant size, have a maximum width greater than or equal to about 2 mm.

Preferably, the second transverse grooves 11, 12 and the third transverse grooves 13 have a maximum width smaller than about 5 mm.

Preferably, in order to ensure a good stiffness in the central region L1, the second transverse grooves 11, 12 and the third transverse grooves 13 have a width greater than or equal to 2 mm only in a superficial portion of the tread band 8, whereas in a deeper portion thereof they preferably narrow to a width smaller than or equal to 1 mm.

The second transverse grooves 11, 12 and the third transverse grooves 13 have a maximum depth greater than about 5 mm. Preferably, the second transverse grooves 11, 12 and the third transverse grooves 13 have a maximum depth smaller than 12 mm.

Preferably, the second transverse grooves 11, 12 and the third transverse grooves 13 have a maximum depth smaller than the maximum depth of the first 2, second 3, third 4 and fourth 5 circumferential grooves.

In the embodiment shown in the figures, the second transverse grooves 11, 12, as well as the third transverse grooves 13, extend substantially parallel to one another in the respective circumferential ribs 9, 10, 14.

The second transverse grooves 11, 12 and the third transverse grooves 13 have substantially the same extension in the respective circumferential ribs.

Preferably, the second transverse grooves 11, 12 and the third transverse grooves 13 extend over at least 50%, preferably 60%, of the width of the circumferential rib 9, 10, 14 where they are located.

Preferably, the second transverse grooves 11, 12 and the third transverse grooves 13 extend over no more than 80% of the width of the circumferential rib 9, 10, 14 where they are located.

In the embodiment shown in figure 4, the second transverse grooves 11, 12 and the third transverse grooves 13 have a curvilinear course along their whole extension.

In particular, the curvilinear course of the second transverse grooves 11,12 forms a concavity facing in an opposite direction with respect to the rolling direction of the tyre, indicated by an arrow F in figure 4.

The curvilinear course of the third transverse grooves 13 forms a concavity facing in the opposite direction with respect to the directions of the second transverse grooves 11, 12. In particular, the curvilinear course of the third transverse grooves 13 forms a concavity facing in the same direction as the rolling direction of the tyre, indicated by the arrow F in figure 4.

In detail, the course of the second and third transverse grooves 11, 12, 13 forms an angle α with the equatorial plane X-X of between 35° and 90°, preferably between 45° and 75°, in absolute value.

The central region L1 too further has a plurality of longitudinal grooves 15.

In the central region L1, the longitudinal grooves 15 extend in the circumferential direction starting from the second transverse grooves 11, 12 or the third transverse grooves 13.

More particularly, in the central region L1, the longitudinal grooves 15 extend in the circumferential direction starting from the second transverse grooves 11, 12 or from the third transverse grooves 13 with respective ends spaced away from the ends of said transverse groves.

The longitudinal grooves 15 of the central region L1 have a smaller extension as compared to the extension of the second transverse grooves 11, 12 and the third transverse grooves 13.

Preferably, in the central region L1, the longitudinal grooves 15 have a substantially straight course.

Preferably, the longitudinal grooves 15 of the central region L1 are inclined relative to a direction parallel to the equatorial plane X-X so as to form an angle γ smaller than 30°, preferably of between 0° and 20°. In the embodiment shown in figure 4, the longitudinal grooves 15 located in the second circumferential rib 10 are arranged according to a counter-inclined direction as compared to the longitudinal grooves 15 located in the first 9 and the third 14 circumferential rib.

The longitudinal grooves 15 of the central region L1 preferably have a maximum width smaller than about 3 mm.

Preferably, the longitudinal grooves 15 of the central region L1 have a maximum depth smaller than a maximum depth of the second and/or third transverse grooves 11, 12, 13. Preferably, the longitudinal grooves 15 of the central region L1 have a maximum depth greater than about 1.5 mm. Preferably, the longitudinal grooves 15 of the central region L1 have a maximum depth smaller than about 3 mm.

In the embodiment shown in figure 4, both the first and the second circumferential rib 9, 10 have a plurality of second sipes 22, with a substantially transverse course, consecutively arranged relative to the second transverse grooves 11, 12.

In this embodiment, the third circumferential rib 14 does not have second sipes 22 consecutively arranged relative to the third transverse grooves 13.

The second sipes 22 are consecutively arranged relative to the second transverse grooves 11, 12 so that the continuity between the second transverse grooves 11, 12 and the second sipes 22 arranged consecutively thereto is not broken.

The second sipes 22 are consecutively arranged relative to the second transverse grooves 11, 12 so that the overall extension of the second transverse grooves 11, 12 and the second sipes 22 is equal to at least 90% of the width of the circumferential rib 9, 10 where they are located.

Preferably, the overall extension of the second transverse grooves 11, 12 and the second sipes 22 is equal to 100% of the width of the circumferential ribs 9, 10 where they are located.

The second sipes 22 have a smaller extension as compared to the extension of the second transverse grooves 11, 12.

Preferably, the second sipes 22 have an extension smaller than 1/3 of the extension of the second transverse grooves 11, 12.

The second sipes 22 preferably have a maximum width smaller than about 1 mm.

Preferably, the second sipes 22 do not have a constant depth along their extension, rather they have a reduction in depth at the third 4 and/or the fourth 5 circumferential groove.

Preferably, the second sipes 22 have a maximum depth greater than about 5 mm.

Preferably, the second sipes 22 have a maximum depth smaller than about 10 mm.

Preferably, the maximum depth of the second sipes 22 is smaller than the maximum depth of the second transverse grooves 11, 12.

Still to improve the behavior on snow, and in particular traction and braking on this kind of road surface, the circumferential ribs 9, 10 further have a plurality of third sipes 23 with a substantially transverse course.

The third sipes 23 extend over at least 60% of the width of the respective circumferential rib 9, 10 where they are located.

In the embodiment shown in figure 4, the third sipes 23 extend over at most 80% of the width of the respective circumferential rib 9, 10 where they are located.

The third sipes 23 are mutually spaced away in the circumferential direction and have no points of mutual intersection and/or points of intersection with said second transverse grooves 11, 12 and/or said second sipes 22.

In each circumferential rib 9,10, thus, the third sipes 23 are interposed between the second transverse grooves 11, 12 and the second sipes 22, and preferably have a course substantially parallel to the course of the second transverse grooves 11, 12 and the second sipes 22.

In detail, the course of the third sipes 23 forms an angle with the equatorial plane X-X of between 35° and 90°, preferably between 45° and 75°, in absolute value.

In the embodiment shown in figure 4, the third sipes 23 do not have a straight course, rather they have a substantially curvilinear course along their extension.

Preferably, the third sipes 23 are arranged so as to intersect the longitudinal grooves 15 located in the ribs 9, 10.

In particular, still referring to the embodiment of figure 4, each longitudinal groove 15 of the first 9 and second 10 circumferential ribs is intersected by at least one third sipe 23.

Preferably, most of the longitudinal grooves 15 in the first 9 and second 10 circumferential ribs are intersected by at least two third sipes 23.

The third sipes 23 preferably have a maximum width smaller than about 1 mm. Preferably, the third sipes 23 do not have a constant depth along their extension, rather they have a depth reduction at the third 4 and/or the fourth 5 circumferential groove. Preferably, the third sipes 23 have a maximum depth greater than about 5 mm. Preferably, the third sipes 23 have a maximum depth smaller than about 10 mm. Preferably, the maximum depth of the third sipes 23 is smaller than the maximum depth of the second transverse grooves 11, 12.

In the embodiment shown in figure 4, the third circumferential rib 14 has a plurality of fourth sipes 24 with a transverse course.

The fourth sipes 24 extend starting from the longitudinal grooves 15 located in the third circumferential rib 14 and preferably up to the second circumferential groove 5 and/or to the first circumferential groove 2.

In particular, in the third circumferential rib 14, a pair of fourth sipes 24 extending up to the first circumferential groove 2, and a fourth sipe 24 extending from the longitudinal groove 15 to the circumferential groove 5, branch off from each longitudinal groove 15.

The fourth sipes 24 are mutually spaced away in the circumferential direction and have no points of mutual intersection and/or points of intersection with the third transverse grooves 13.

In the third circumferential rib 14, thus, the fourth sipes 24 are interposed between the third transverse grooves 13 and preferably have a course substantially parallel to one another and, at least partially, parallel to the course of the transverse grooves 13. Preferably, the fourth sipes 24 extend over at most 60% of the width of the circumferential rib 14.

The fourth sipes 24 preferably have a maximum width smaller than about 1 mm. Preferably, the fourth sipes 24 do not have a constant depth along their extension, rather they have a reduction in depth at the first 2 and/or the fourth 5 circumferential groove. Preferably, the fourth sipes 24 have a maximum depth greater than about 5 mm. Preferably, the fourth sipes 24 have a maximum depth smaller than about 10 mm. Preferably, the maximum depth of the fourth sipes 24 is smaller than the maximum depth of the third transverse grooves 13.

Figure 5 shows a third embodiment of a tread pattern of the tyre according to the present invention, again particularly suitable for fitting to wheels of SUVs and Crossovers.

The embodiment of the tyre of figure 5 differs from that of figure 4 in particular in the arrangement of the second and third transverse grooves 11, 12, 13, of the longitudinal grooves 15, and in the arrangement and form of the sipes. Therefore, the following description will focus only on these aspects, whereas for the remaining aspects not explicitly described hereinafter reference shall be made to the description of the embodiment of figure 4.

In particular, the second and third transverse grooves 11, 12, 13 are provided in the central region L1 in a smaller number as compared to the first transverse grooves 6,7 of the shoulder regions L2, L3. More particularly, in the embodiment shown in figure 5 the second and third transverse grooves 11, 12, 13 are numerically equal to half of the first transverse grooves 6, 7.

Furthermore, in the first shoulder region L2 the longitudinal grooves 15 intersect the first transverse grooves 6. More particularly, a longitudinal groove 15 is respectively arranged every two first transverse grooves 6.

In the central region L1, the longitudinal grooves 15 have an extension greater than the extension of the second transverse grooves 11, 12 and the third transverse grooves 13. Differently from the two circumferential ribs 9, 14, in the second circumferential rib 10 the longitudinal grooves 15, by extending in the circumferential direction, intersect the second transverse grooves 12.

More particularly, in the second circumferential rib 10 the longitudinal grooves 15 are arranged so as to form a sequence of cross-shaped grooves together with the second transverse grooves 12.

Still in the central region L1, the third circumferential rib 14 too has a plurality of third sipes 23 with a substantially transverse course, as well as the first 9 and the second 10 circumferential rib. The third sipes 23 located in the third circumferential rib 14 have the features already described above with reference to the third sipes 23 located in the circumferential ribs 9, 10.

In particular, still referring to the embodiment of figure 5, each longitudinal groove 15 of the first 9, the second 10 and the third 14 circumferential rib is intersected by at least one third sipe 23, preferably by at least three third sipes 23.

Various modifications may be made to the embodiments herein described in detail, while remaining within the scope of protection of the invention, as defined by the following claims.

## Claims

1. Car tyre (1) having a tread band (8) comprising a central region (L1), extending across an equatorial plane (X-X), and two shoulder regions (L2, L3), which are separated from the central region by a first circumferential groove (2), axially delimiting a first shoulder region (L2) from the central region (L1), and a second circumferential groove (3), axially delimiting a second shoulder region (L3) from the central region (L1);
- said central region (L1) having a width greater than or equal to at least 35% of an effective width (L) of said tread band (8);
- said first shoulder region (L2) and said second shoulder region (L3) comprising a plurality of first transverse grooves (6, 7) having a first end located substantially at the respective edge of the tread band (8);
- at least one of said first shoulder region (L2) and said second shoulder region (L3) comprising a plurality of first sipes (21) having a substantially transverse course and consecutively arranged relative to said first transverse grooves (6, 7), so that an overall extension of said first transverse grooves (6, 7) and of said first sipes (21) is equal to at least 90% of the width of the shoulder region (L2, L3) where they are located;
- said first transverse grooves (6, 7) having an extension greater than the extension of the first sipes (21);
- said first transverse grooves (6, 7) having a maximum width greater than or equal to 4 mm;
- said central region (L1) comprising a first and a second circumferential rib (9, 10) separated by a third circumferential groove (4), said first and second circumferential ribs (9, 10) comprising a plurality of second transverse grooves (11, 12), and a plurality of second sipes (22) having a substantially transverse course and consecutively arranged relative to said second transverse grooves (11, 12), so that an overall extension of said second transverse grooves (11, 12) and said second sipes (21) is equal to at least 90% of the width of the circumferential rib where they are located;
- said second transverse grooves (11, 12) having an extension greater than the extension of the second sipes (22);
- said second transverse grooves (11, 12) having a maximum width greater than or equal to 2 mm;
- said tread band (8) further comprising at least one further plurality of sipes (23, 24, 25); **characterized in that**;
- said first, second and/or a third circumferential rib (9, 10, 14) comprising a plurality of longitudinal grooves (15).

2. Tyre (1) according to claim 1, **characterized in that** said overall extension of said first transverse grooves (6, 7) and said first sipes (21) is equal to 100% of the width of the shoulder region (L2, L3) where they are located.

3. Tyre (1) according to claim 1 or 2, **characterized in that** the overall extension of said second transverse grooves (11, 12) and said second sipes (22) is equal to 100% of the width of the circumferential rib (9, 10) where they are located.

4. Tyre (1) according to any one of the previous claims, **characterized in that** said at least one further plurality of sipes (23, 24, 25) comprises a plurality of third sipes (23) having a substantially transverse course and located in at least one circumferential rib (9, 10, 14) of said central region (L1), said third sipes (23) extending over at least 60% of the width of the circumferential rib (9, 10, 14) where they are located.

5. Tyre (1) according to claim 4, **characterized in that** said third sipes (23) extend over 100% of the width of the circumferential rib (9, 10, 14) where they are located.

6. Tyre (1) according to any one of claims 3 to 5, **characterized in that** said third sipes (23) are interposed between said second transverse grooves (11, 12) and preferably have a course which is substantially parallel to the course of said second transverse grooves (11, 12) over at least 50% of their extension.

7. Tyre (1) according to any one of the previous claims, **characterized in that** said at least one further plurality of sipes (23, 24, 25) comprises a plurality of fourth sipes (24) having a substantially transverse course and located in at least one circumferential rib (9, 10, 14) of said central region (L1), said fourth sipes (24) having a smaller extension as compared to said third sipes (23).

8. Tyre (1) according to claim 7, **characterized in that** said fourth sipes (24) extend over at most 60% of the width of the circumferential rib (9, 10) where they are located.

9. Tyre (1) according to any one of the previous claims, **characterized in that** said at least one further plurality of sipes (23, 24, 25) comprises a plurality of fifth sipes (25) having a substantially transverse course and located in said first and/or second shoulder region (L2, L3), said fifth sipes (25) having an extension greater than 60% of the width of the shoulder region (L2, L3) where they are located.

10. Tyre (1) according to any one of the previous claims, **characterized in that** said first sipes (21) have an extension smaller than or equal to 1/3 of the extension of said first transverse grooves (6, 7).

11. Tyre (1) according to any one of the previous claims, **characterized in that** said second sipes (22) have an extension smaller than or equal to 1/3 of the extension of said second transverse grooves (11, 12).

12. Tyre (1) according to any one of the previous claims, **characterized in that** said central region (L1) comprises a third circumferential rib (14) located between said first (2) or said second (3) circumferential groove and a fourth circumferential groove (5), said third circumferential rib (14) comprising a plurality of third transverse grooves (13).

13. Tyre (1) according to claim 12, **characterized in that** said third transverse grooves (13) have a maximum width greater than or equal to 2 mm and/or an extension greater than 60% of the width of the third circumferential rib (14).

14. Tyre (1) according to claim 12 or 13, **characterized in that** said first and/or second shoulder regions (L2, L3), comprise a plurality of longitudinal grooves (15).

15. Tyre (1) according to claim 14, **characterized in that** at least some of said longitudinal grooves (15) intersect at least two third sipes (23).

16. Tyre (1) according to claim 14 or 15, **characterized in that** said longitudinal grooves (15) extend starting from a first, a second or a third transverse groove (11, 12, 13).

17. Tyre (1) according to any one of claims 14 to 16, **characterized in that** at least some of said longitudinal grooves (15) intersect a first, a second or a third transverse groove (6, 7, 11, 12, 13).

18. Tyre (1) according to any one of claims 14 to 17, **characterized in that** said fourth sipes (24) extend in said third circumferential rib (14) starting from said longitudinal grooves (15) and preferably up to said fourth circumferential groove (5) and/or up to said first or said second circumferential groove (2, 3).

19. Tyre (1) according to any one of claims 14 to 18, **characterized in that** said longitudinal grooves (15) have a maximum depth smaller than a maximum depth of said first, second and/or third transverse grooves (6, 7, 11, 12, 13).

20. Tyre (1) according to any one of claims 14 to 19, **characterized in that** said longitudinal grooves (15) have a maximum width smaller than the maximum width of said first, second and/or third transverse grooves (6, 7, 11, 12, 13).

## Patentansprüche

1. Autoreifen (1), der ein Laufflächenband (8) aufweist, umfassend einen mittleren Bereich (L1), der sich über eine Äquatorialebene (X-X) erstreckt, und zwei Schulterbereiche (L2, L3), die von dem mittleren Bereich durch eine erste umlaufende Rille (2), die einen ersten Schulterbereich (L2) von dem mittleren Bereich (L1) axial abgrenzt, und eine zweite umlaufende Rille (3), die einen zweiten Schulterbereich (L3) von dem mittleren Bereich (L1) axial abgrenzt, getrennt sind;
- wobei der mittlere Bereich (L1) eine Breite aufweist, die größer als oder gleich mindestens 35 % einer effektiven Breite (L) des Laufflächenbands (8) ist;
- der erste Schulterbereich (L2) und der zweite Schulterbereich (L3) umfassend eine Vielzahl von ersten Querrillen (6, 7), die ein erstes Ende aufweisen, das sich im Wesentlichen an der jeweiligen Kante des Laufflächenbands (8) befindet;
- mindestens einer des ersten Schulterbereichs (L2) und des zweiten Schulterbereichs (L3) umfassend eine Vielzahl von ersten Lamellen (21), die einen im Wesentlichen quergerichteten Verlauf aufweisen und relativ zu den ersten Querrillen (6, 7) nacheinander angeordnet sind, sodass eine Gesamterstreckung der ersten Querrillen (6, 7) und der ersten Lamellen (21) gleich mindestens 90 % der Breite des Schulterbereichs (L2, L3) ist, in dem sie sich befinden;
- wobei die ersten Querrillen (6, 7) eine Erstreckung aufweisen, die größer als die Erstreckung der ersten Lamellen (21) ist;
- wobei die ersten Querrillen (6, 7) eine maximale Breite aufweisen, die größer als oder gleich 4 mm ist;
- der mittlere Bereich (L1) umfassend eine erste und eine zweite umlaufende Rippe (9, 10), die durch eine dritte umlaufende Rille (4) getrennt sind, die erste und die zweite umlaufende Rippe (9, 10) umfassend eine Vielzahl von zweiten Querrillen (11, 12) und eine Vielzahl von zweiten Lamellen (22), die einen im Wesentlichen quergerichteten Verlauf aufweisen und in Bezug auf die zweiten Querrillen (11, 12) nacheinander angeordnet sind, sodass eine Gesamterstreckung der zweiten Querrillen (11, 12) und der zweiten Lamellen (21) gleich mindestens 90 % der Breite der umlaufenden Rippe ist, in der sie sich befinden;
- wobei die zweiten Querrillen (11, 12) eine Erstreckung aufweisen, die größer als die Erstreckung der zweiten Lamellen (22) ist;
- wobei die zweiten Querrillen (11, 12) eine maximale Breite aufweisen, die größer als oder gleich 2 mm ist;
- das Laufflächenband (8) ferner umfassend mindestens eine weitere Vielzahl von Lamellen (23, 24, 25); **dadurch gekennzeichnet, dass**
die erste, die zweite und/oder eine dritte umlaufende Rippe (9, 10, 14) eine Vielzahl von Längsrillen (15) umfassen.

2. Reifen (1) nach Anspruch 1, **dadurch gekennzeichnet, dass** die Gesamterstreckung der ersten Querrillen (6, 7) und der ersten Lamellen (21) gleich 100 % der Breite des Schulterbereichs (L2, L3) ist, in dem sie sich befinden.

3. Reifen (1) nach Anspruch 1 oder 2, **dadurch gekennzeichnet, dass** die Gesamterstreckung der zweiten Querrillen (11, 12) und der zweiten Lamellen (22) gleich 100 % der Breite der umlaufenden Rippe (9, 10) ist, in der sie sich befinden.

4. Reifen (1) nach einem der vorstehenden Ansprüche,
**dadurch gekennzeichnet, dass** die mindestens eine weitere Vielzahl von Lamellen (23, 24, 25) eine Vielzahl von dritten Lamellen (23) umfasst, die einen im Wesentlichen quergerichteten Verlauf aufweisen und sich in mindestens einer umlaufenden Rippe (9, 10, 14) des mittleren Bereichs (L1) befinden, wobei sich die dritten Lamellen (23) über mindestens 60 % der Breite der umlaufenden Rippe (9, 10, 14) erstrecken, in der sie sich befinden.

5. Reifen (1) nach Anspruch 4, **dadurch gekennzeichnet, dass** sich die dritten Lamellen (23) über 100 % der Breite der umlaufenden Rippe (9, 10, 14) erstrecken, in der sie sich befinden.

6. Reifen (1) nach einem der Ansprüche 3 bis 5,
**dadurch gekennzeichnet, dass** die dritten Lamellen (23) zwischen den zweiten Querrillen (11,12) eingefügt sind und vorzugsweise einen Verlauf aufweisen, der im Wesentlichen parallel zu dem Verlauf der zweiten Querrillen (11, 12) über mindestens 50 % ihrer Erstreckung ist.

7. Reifen (1) nach einem der vorstehenden Ansprüche,
**dadurch gekennzeichnet, dass** die mindestens eine weitere Vielzahl von Lamellen (23, 24, 25) eine Vielzahl von vierten Lamellen (24) umfasst, die einen im Wesentlichen quergerichteten Verlauf aufweisen und sich in mindestens einer umlaufenden Rippe (9, 10, 14) des mittleren Bereichs (L1) befinden, wobei die vierten Lamellen (24) eine geringere Erstreckung im Vergleich zu den dritten Lamellen (23) aufweisen.

8. Reifen (1) nach Anspruch 7, **dadurch gekennzeichnet, dass** sich die vierten Lamellen (24) über höchstens 60 % der Breite der umlaufenden Rippe (9, 10) erstrecken, in der sie sich befinden.

9. Reifen (1) nach einem der vorstehenden Ansprüche,
**dadurch gekennzeichnet, dass** die mindestens eine weitere Vielzahl von Lamellen (23, 24, 25) eine Vielzahl von fünften Lamellen (25) umfasst, die einen im Wesentlichen quergerichteten Verlauf aufweisen und sich in dem ersten und/oder dem zweiten Schulterbereich (L2, L3) befinden, wobei die fünften Lamellen (25) eine Erstreckung aufweisen, die größer als 60 % der Breite des Schulterbereichs (L2, L3) ist, in dem sie sich befinden.

10. Reifen (1) nach einem der vorstehenden Ansprüche,
**dadurch gekennzeichnet, dass** die ersten Lamellen (21) eine Erstreckung aufweisen, die kleiner als oder gleich 1/3 der Erstreckung der ersten Querrillen (6, 7) ist.

11. Reifen (1) nach einem der vorstehenden Ansprüche,
**dadurch gekennzeichnet, dass** die zweiten Lamellen (22) eine Erstreckung aufweisen, die kleiner als oder gleich 1/3 der Erstreckung der zweiten Querrillen (11, 12) ist.

12. Reifen (1) nach einem der vorstehenden Ansprüche,
**dadurch gekennzeichnet, dass** der mittlere Bereich (L1) eine dritte umlaufende Rippe (14) umfasst, die sich zwischen der ersten (2) oder der zweiten (3) umlaufenden Rille und einer vierten umlaufenden Rille (5) befindet, die dritte umlaufende Rippe (14) umfassend eine Vielzahl von dritten Querrillen (13).

13. Reifen (1) nach Anspruch 12, **dadurch gekennzeichnet, dass** die dritten Querrillen (13) eine maximale Breite, die größer als oder gleich 2 mm ist, und/oder eine Erstreckung, die größer als 60 % der Breite der dritten umlaufenden Rippe (14) ist, aufweisen.

14. Reifen (1) nach Anspruch 12 oder 13, **dadurch gekennzeichnet, dass** der erste und/oder der zweite Schulterbereich (L2, L3) eine Vielzahl von Längsrillen (15) umfassen.

15. Reifen (1) nach Anspruch 14, **dadurch gekennzeichnet, dass** mindestens einige der Längsrillen (15) mindestens zwei dritte Lamellen (23) schneiden.

16. Reifen (1) nach Anspruch 14 oder 15, **dadurch gekennzeichnet, dass** sich die Längsrillen (15) ausgehend von einer ersten, einer zweiten oder einer dritten Querrille (11, 12, 13) erstrecken.

17. Reifen (1) nach einem der Ansprüche 14 bis 16,
**dadurch gekennzeichnet, dass** mindestens einige der Längsrillen (15) eine erste, eine zweite oder eine dritte Querrille (6, 7, 11, 12, 13) schneiden.

18. Reifen (1) nach einem der Ansprüche 14 bis 17,
**dadurch gekennzeichnet, dass** sich die vierten Lamellen (24) in der dritten umlaufenden Rippe (14) ausgehend von den Längsrillen (15) und vorzugsweise bis zu der vierten umlaufenden Rille (5) und/oder bis zu der ersten oder der zweiten umlaufenden Rille (2, 3) erstrecken.

19. Reifen (1) nach einem der Ansprüche 14 bis 18,
**dadurch gekennzeichnet, dass** die Längsrillen (15) eine maximale Tiefe aufweisen, die kleiner als eine maximale Tiefe der ersten, der zweiten und/oder der dritten Querrille (6, 7, 11, 12, 13) ist.

20. Reifen (1) nach einem der Ansprüche 14 bis 19,
**dadurch gekennzeichnet, dass** die Längsrillen (15) eine maximale Breite aufweisen, die kleiner als die maximale Breite der ersten, der zweiten und/oder der dritten Querrille (6, 7, 11, 12, 13) ist.

## Revendications

1. Pneu de voiture (1) présentant une bande de roulement (8) comprenant une région centrale (L1), s'étendant sur un plan équatorial (X-X), et deux régions d'épaulement (L2, L3), qui sont séparées de la région centrale par une première rainure circonférentielle (2), délimitant de manière axiale une première région d'épaulement (L2) à partir de la région centrale (L1), et une deuxième rainure circonférentielle (3), délimitant de manière axiale une seconde région d'épaulement (L3) à partir de la région centrale (L1) ;
- ladite région centrale (L1) présentant une largeur supérieure ou égale à au moins 35 % d'une largeur effective (L) de ladite bande de roulement (8) ;
- ladite première région d'épaulement (L2) et ladite seconde région d'épaulement (L3) comprennent une pluralité de premières rainures transversales (6, 7) présentant une première extrémité située sensiblement au niveau du bord respectif de la bande de roulement (8) ;
- au moins l'une de ladite première région d'épaulement (L2) et de ladite seconde région d'épaulement (L3) comprenant une pluralité de premières lamelles (21) présentant une course sensiblement transversale et agencées consécutivement par rapport auxdites premières rainures transversales (6, 7), de sorte qu'une extension globale desdites premières rainures transversales (6, 7) et desdites premières lamelles (21) est égale à au moins 90 % de la largeur de la région d'épaulement (L2, L3) où ils sont situés ;
- lesdites premières rainures transversales (6, 7) présentant une extension supérieure à l'extension des premières lamelles (21) ;
- lesdites premières rainures transversales (6, 7) présentant une largeur maximale supérieure ou égale à 4 mm ;
- ladite région centrale (L1) comprenant une première et une deuxième nervure circonférentielle (9, 10) séparées par une troisième rainure circonférentielle (4), lesdites première et deuxième nervures circonférentielles (9, 10) comprenant une pluralité de deuxièmes rainures transversales (11, 12), et une pluralité de deuxièmes lamelles (22) présentant une course sensiblement transversale et agencées consécutivement par rapport auxdites deuxièmes rainures transversales (11, 12), de sorte qu'une extension globale desdites deuxièmes rainures transversales (11, 12) et desdites deuxièmes lamelles (21) est égale à au moins 90 % de la largeur de la nervure circonférentielle où elles sont situées ;
- lesdites deuxièmes rainures transversales (11, 12) présentant une extension supérieure à l'extension des deuxièmes lamelles (22) ;
- lesdites deuxièmes rainures transversales (11, 12) présentant une largeur maximale supérieure ou égale à 2 mm ;
- ladite bande de roulement (8) comprenant en outre au moins une autre pluralité de lamelles (23, 24, 25) ; **caractérisé en ce que ;**
- lesdites première, deuxième et/ou troisième nervures circonférentielles (9, 10, 14) comprenant une pluralité de rainures longitudinales (15).

2. Pneu (1) selon la revendication 1, **caractérisé en ce que** ladite extension globale desdites premières rainures transversales (6, 7) et desdites premières lamelles (21) est égale à 100 % de la largeur de la région d'épaulement (L2, L3) où elles sont situées.

3. Pneu (1) selon la revendication 1 ou 2, **caractérisé en ce que** l'extension globale desdites deuxièmes rainures transversales (11, 12) et desdites deuxièmes lamelles (22) est égale à 100 % de la largeur de la nervure circonférentielle (9, 10) où elles sont situées.

4. Pneu (1) selon l'une quelconque des revendications précédentes, **caractérisé en ce que** ladite au moins une pluralité supplémentaire de lamelles (23, 24, 25) comprend une pluralité de troisièmes lamelles (23) présentant une course sensiblement transversale et situées dans au moins une nervure circonférentielle (9, 10, 14) de ladite région centrale (L1), lesdites troisièmes lamelles (23) s'étendant sur au moins 60 % de la largeur de la nervure circonférentielle (9, 10, 14) où elles sont situées.

5. Pneu (1) selon la revendication 4, **caractérisé en ce que** lesdites troisièmes lamelles (23) s'étendent sur 100 % de la largeur de la nervure circonférentielle (9, 10, 14) où elles sont situées.

6. Pneu (1) selon l'une quelconque des revendications 3 à 5,
**caractérisé en ce que** lesdites troisièmes lamelles (23) sont interposées entre lesdites deuxièmes rainures transversales (11, 12) et présentent de préférence une course sensiblement parallèle au parcours desdites deuxièmes rainures transversales (11, 12) sur au moins 50 % de leur extension.

7. Pneu (1) selon l'une quelconque des revendications précédentes,
**caractérisé en ce que** ladite au moins une pluralité supplémentaire de lamelles (23, 24, 25) comprend une pluralité de quatrièmes lamelles (24) présentant une course sensiblement transversale et situées dans au moins une nervure circonférentielle (9, 10, 14) de ladite région centrale (L1), lesdites quatrièmes lamelles (24) présentant une extension plus petite par rapport auxdites troisièmes lamelles (23).

8. Pneu (1) selon la revendication 7, **caractérisé en ce que** lesdites quatrièmes lamelles (24) s'étendent sur au plus 60 % de la largeur de la nervure circonférentielle (9, 10) où elles sont situées.

9. Pneu (1) selon l'une quelconque des revendications précédentes,
**caractérisé en ce que** ladite au moins une pluralité supplémentaire de lamelles (23, 24, 25) comprend une pluralité de cinquièmes lamelles (25) présentant une course sensiblement transversale et situées dans ladite première et/ou ladite seconde région d'épaulement (L2, L3), lesdites cinquièmes lamelles (25) présentant une extension supérieure à 60 % de la largeur de la région d'épaulement (L2, L3) où elles sont situées.

10. Pneu (1) selon l'une quelconque des revendications précédentes,
**caractérisé en ce que** lesdites premières lamelles (21) présentent une extension inférieure ou égale à 1/3 de l'extension desdites premières rainures transversales (6, 7).

11. Pneu (1) selon l'une quelconque des revendications précédentes,
**caractérisé en ce que** lesdites deuxièmes lamelles (22) présentent une extension inférieure ou égale à 1/3 de l'extension desdites deuxièmes rainures transversales (11, 12).

12. Pneu (1) selon l'une quelconque des revendications précédentes,
**caractérisé en ce que** ladite région centrale (L1) comprend une troisième nervure circonférentielle (14) située entre ladite première (2) ou ladite deuxième (3) rainure circonférentielle et une quatrième rainure circonférentielle (5), ladite troisième nervure circonférentielle (14) comprenant une pluralité de troisièmes rainures transversales (13).

13. Pneu (1) selon la revendication 12, **caractérisé en ce que** lesdites troisièmes rainures transversales (13) présentent une largeur maximale supérieure ou égale à 2 mm et/ou une extension supérieure à 60 % de la largeur de la troisième nervure circonférentielle (14).

14. Pneu (1) selon la revendication 12 ou 13, **caractérisé en ce que** lesdites première et/ou seconde régions d'épaulement (L2, L3), comprennent une pluralité de rainures longitudinales (15).

15. Pneu (1) selon la revendication 14, **caractérisé en ce qu'au** moins certaines desdites rainures longitudinales (15) croisent au moins deux troisièmes lamelles (23).

16. Pneumatique (1) selon la revendication 14 ou 15, **caractérisé en ce que** lesdites rainures longitudinales (15) s'étendent à partir d'une première, d'une deuxième ou d'une troisième rainure transversale (11, 12, 13).

17. Pneu (1) selon l'une quelconque des revendications 14 à 16,
**caractérisé en ce qu'au** moins certaines desdites rainures longitudinales (15) croisent une première, une deuxième ou une troisième rainure transversale (6, 7, 11, 12, 13).

18. Pneu (1) selon l'une quelconque des revendications 14 à 17,
**caractérisé en ce que** lesdites quatrièmes lamelles (24) s'étendent dans ladite troisième nervure circonférentielle (14) en partant desdites rainures longitudinales (15) et de préférence jusqu'à ladite quatrième rainure circonférentielle (5) et/ou jusqu'à ladite première ou ladite deuxième rainure circonférentielle (2, 3).

19. Pneu (1) selon l'une quelconque des revendications 14 à 18,
**caractérisé en ce que** lesdites rainures longitudinales (15) présentent une profondeur maximale inférieure à une profondeur maximale desdites premières, deuxièmes et/ou troisièmes rainures transversales (6, 7, 11, 12, 13).

20. Pneu (1) selon l'une quelconque des revendications 14 à 19,
**caractérisé en ce que** lesdites rainures longitudinales (15) présentent une largeur maximale inférieure à la largeur maximale desdites premières, deuxièmes et/ou troisièmes rainures transversales (6, 7, 11, 12, 13).
